# EUROPEAN PATENT APPLICATION

(11) **EP 1 786 184 A2**
(43) Date of publication of application: **16.05.2007**
(21) Application number: 06123691.5
(22) Date of filing: 08.11.2006
(51) Int. Cl.: H04M 1/2745

(54) **Method and apparatus for saving speed dial number in mobile communication terminal**

(30) Priority: 12.11.2005 KR 20050108296
(71) Applicant: Samsung Electronics Co., Ltd., Suwon-si, Gyeonggi-Do (KR)
(72) Inventor: Chung, Woo-Chan, No.825-161,Rosehyundae APT,, Gyeonggi-do (KR); Bok, Il-Geun, Songpa-gu Seoul (KR); Kim, Jeong-Hyo, Bundang-gu, Seongnam-si Gyeonggi-do (KR)
(74) Representative: Zimmer, Franz-Josef

(57) **Abstract**

A method and an apparatus for saving a speed dial number in mobile communication terminal are provided. The method includes: when a key for designating a speed dial number to a specific phone number is inputted to a phone directory edit window (203), displaying a speed dial designation pop-up window having a plurality of numbers (207) arranged in an MxN matrix (400); when one of the numbers is selected, differently displaying the selected number and the other numbers; and when a setup key is inputted, designating the selected number as the speed dial number corresponding to the specific phone number.

## Description

The present invention relates generally to a mobile communication terminal, and in particular, to a method and an apparatus for saving a speed dial number in a mobile communication terminal.

The use of mobile communication terminals is widespread because of their portability, and service providers and terminal manufacturers have made an effort to develop mobile communication terminals with more convenient functions for the purpose of attracting potential users. For example, mobile communication terminals provide a variety of additional functions and services, such as a phone book function, a game function, a short message service, an Internet service, an e-mail service, and so on.

When a user has stored phone numbers in a phone book, he or she can make a call simply by pressing a speed dial number, instead of dialing the phone number. Also, when a user forgets a desired phone number, he or she can easily find the phone number by searching the speed dial numbers previously stored in the phone book. That is, the speed dial is a useful function that can dial a phone number simply by pressing a single button or a speed dial number.

In a conventional mobile communication terminal, when a user inputs a name and a phone number in a phone directory entry or edit menu, a control unit of the terminal automatically designates a speed dial number to the input phone number. Consequently, the user cannot designate a desired speed dial number to the phone number. If the user wants to change the setting, he or she has to edit the speed dial number.

The present invention has been designed to substantially solve at least the above problems and/or disadvantages and to provide at least the advantages below. Accordingly, the object of the present invention is to provide a method and an apparatus for saving a speed dial number in a mobile communication terminal.

This object is solved by the subject matter of the independent claims.

Preferred embodiments are defined in the dependent claims.

According to one aspect of the present invention, a method for saving a speed dial number in a mobile communication terminal includes : displaying a speed dial designation pop-up window having a plurality of numbers arranged in an M×N matrix; selecting one of the plurality of numbers to designate as the speed dial number; and when a setup key is input, designating the selected number as the speed dial number corresponding to a phone number.

According to another aspect of the present invention, an apparatus for saving a speed dial number in a mobile communication terminal includes: an input means for selecting one of a plurality of numbers; and a controller for displaying a speed dial designation pop-up window having the plurality of numbers arranged in an MxN matrix, and designating the selected number as the speed dial number corresponding to a phone number.

The present invention will become more apparent from the following detailed description when taken in conjunction with the accompanying drawings in which:
FIG. 1 is a block diagram of a mobile communication terminal according to the present invention;
FIGs. 2A and 2B illustrate a flowchart illustrating a method for saving a speed dial number in a mobile communication terminal according to the present invention;
FIG. 3 illustrates an example of saving a speed dial number in the mobile communication terminal according to the present invention; and
FIG. 4 illustrates an example of saving a speed dial number in the mobile communication terminal according to the present invention.

Preferred embodiments of the present invention will be described herein below with reference to the accompanying drawings. In the following description, well-known functions or constructions are not described in detail to avoid obscuring the invention with unnecessary detail.

Hereinafter, a method and an apparatus for saving a speed dial number in a mobile communication terminal will be described in detail.

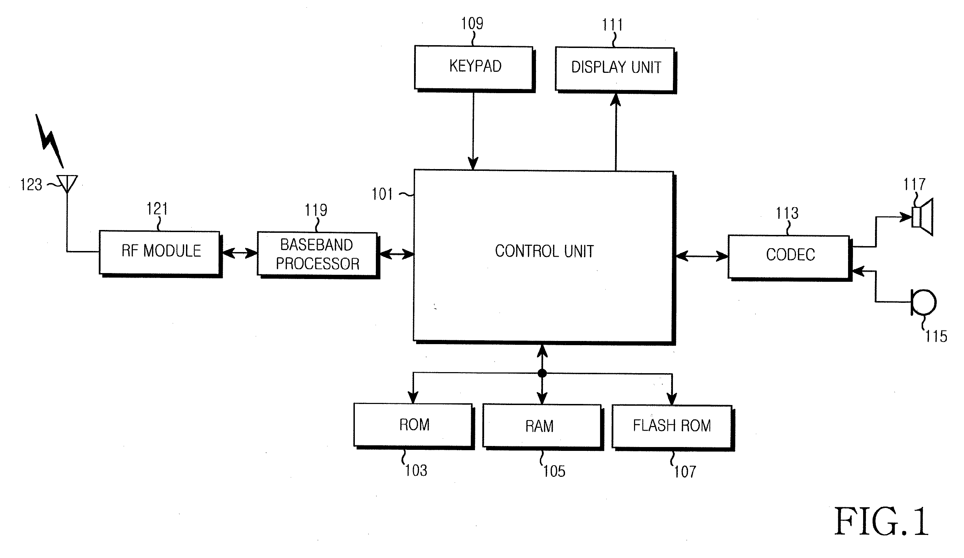

FIG. 1 is a block diagram of a mobile communication terminal according to the present invention. Examples of the mobile communication terminal include Cellular phones, Personal Communication System (PCS) phones, Personal Data Assistants (PDAs), and International Mobile Telecommunication-2000 (IMT-2000) terminals. The following descriptions will be made with reference to the structure of the above terminals.

Referring to FIG. 1, the mobile communication terminal includes a control unit (e.g., a microprocessor unit (MPU)) 101, a Read Only Memory (ROM) 103, a Random Access Memory (RAM) 105, a flash ROM 107, a keypad 109, a display unit 111, a Coder-Decoder (CODEC) 113, a microphone 115, a speaker 117, a baseband processor 119, an RF module 121, and an antenna 123. The control unit 101 controls an overall operation of the mobile communication terminal. For example, the control unit 101 processes and controls voice communication and data communication. In addition, the control unit 101 performs a function of saving a speed dial number corresponding to a specified phone number. A detailed description about the general control operation of the control unit 101 will be omitted for conciseness.

The ROM 103 stores a variety of reference data and microcodes of a program for the control and process of the control unit 101. Specially, the ROM 103 stores a program for saving a speed dial number corresponding to a specified phone number. The RAM 105 is a working memory of the control unit 101 and temporarily stores data generated during operations. The flash ROM 107 stores a variety of updateable data such as phone numbers.

The keypad 109 includes 0-9 number keys and a plurality of function keys, such as a Menu key, a Cancel (Delete) key, a Confirmation (Enter) key, a Talk key, an End key, an Internet connection key, and Navigation keys (or direction keys) to provide key input data that corresponds to a key pressed by a user to control unit 101. The display unit 111 displays status information generated during operations, numerals and characters, moving pictures and still pictures, and so on. A color TFT LCD may be used for the display unit 111.

The CODEC 113 is connected to the control unit 101, and the microphone 115 and the speaker 117 are connected to the CODEC 113. The CODEC 113, the microphone 115, and the speaker 117 serve as a voice input/output block for telephone calling and voice recording. The CODEC 113 converts digital data received from the control unit 101 into an analog audio signal to output the analog audio signal through the speaker 117, and converts an audio signal received through the microphone 115 into digital data to provide the digital data to the control unit 101.

The RF module 121 down-converts an RF signal received through the antenna 123 to provide the down-converted signal to the baseband processor 119, and up-converts a baseband signal received from the baseband processor 119 to transmit the up-converted signal through the antenna 123. The baseband processor 119 processes a baseband signal transmitted/received between the RF module 121 and the control unit 101. For example, during a transmission operation, the baseband processor 119 channel-codes and spreads data to be transmitted. During a reception operation, the baseband processor 119 despreads and channel-decodes a received signal.

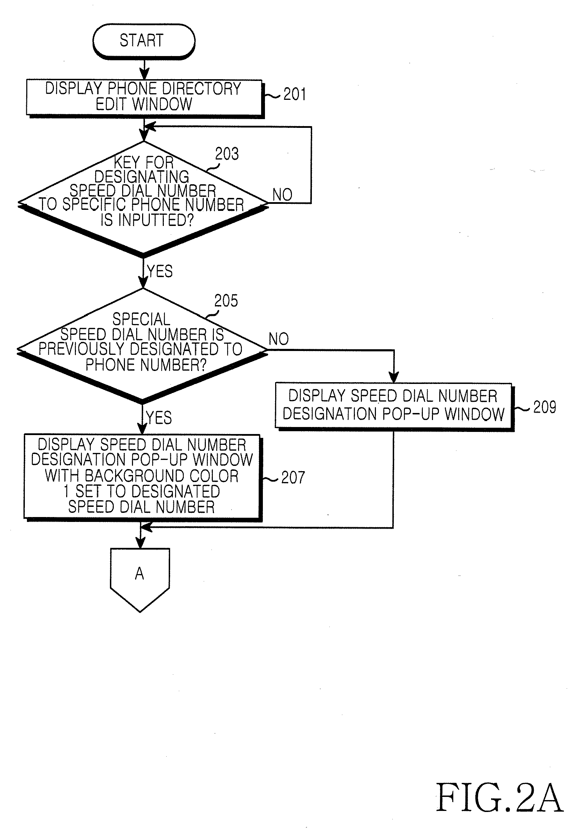

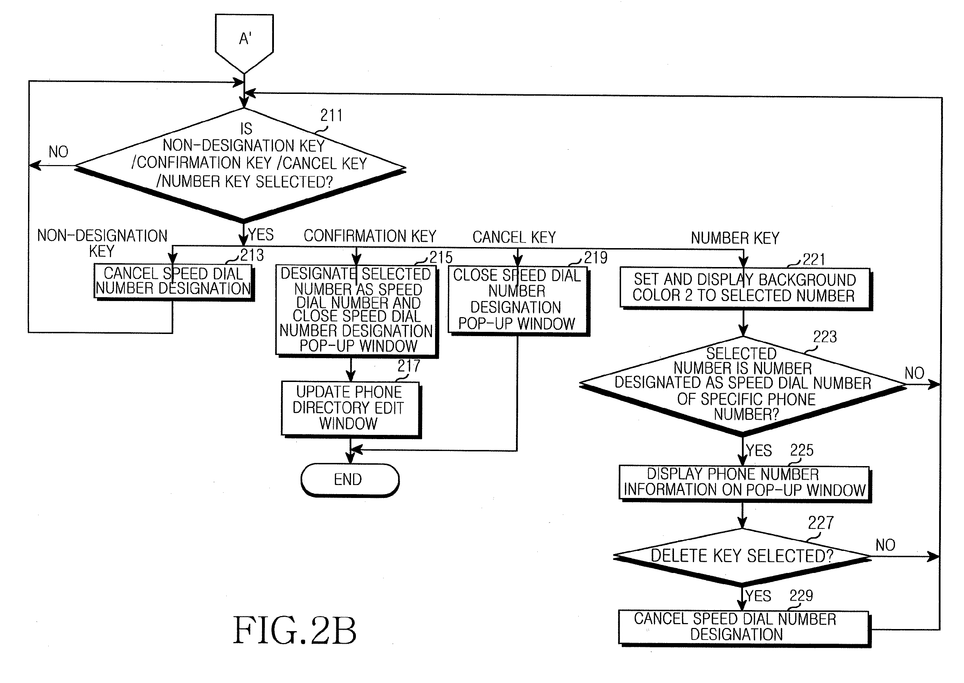

FIGs. 2A and 2B illustrate a flowchart illustrating a method for saving a speed dial number in a mobile communication terminal according to the present invention.

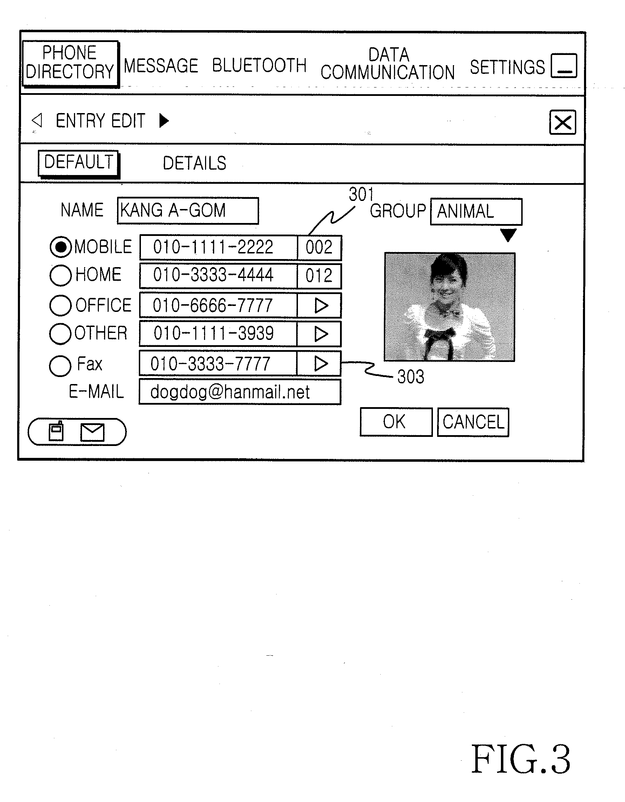

Referring to FIG. 2A (from start to step 209), the control unit 101 displays a phone directory edit window for a specified recipient on a display unit 111 in step 201. The phone directory edit window may include an input window for inputting phone numbers, such as a mobile phone number, a home phone number, an office phone number, other phone number, and a fax number. Keys for designating speed dial numbers to the phone numbers may be displayed at the sides of the corresponding phone numbers. Referring to FIG. 3, a speed dial number 063 is designated to Kang A-Gom's mobile phone number, and a speed dial number 012 is designated to Kang A-Gom's home phone number. On the other hand, speed dial numbers are not designated to Kang A-Gom's office phone number, other phone number, and fax number. The non-designation of the speed dial numbers is marked with a symbol "▷ " at item 303 of Fig. 3.

In step 203, the control unit 101 determines whether a key for designating a speed dial number to the recipient's specified phone number is pressed. The keys designated at items 301 and 303 of Fig. 3 can indicate the designation or non-designation of the speed dial number. The keys 301 and 303 may be selected by the user.

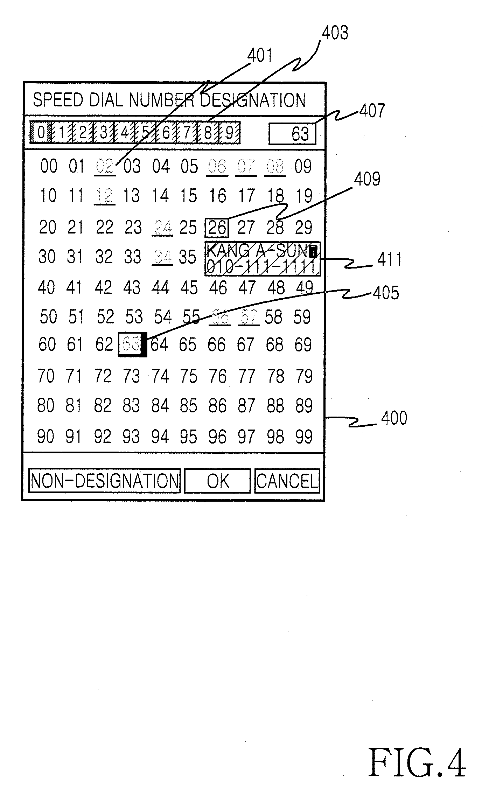

When pressing of the key is detected, the control unit 101 determines whether a specific speed dial number is previously designated to the corresponding phone number in step 205. In step 207, when the specific speed dial number is previously designated, the control unit 101 displays a speed dial designation pop-up window on the display unit 111, with a background color being set to the designated speed dial number. The speed dial designation pop-up window 400 displays numbers in an MxN matrix, where M and N may be equal to each other. For example in FIG. 4, numbers 00 to 99 are arranged in a 10×10 matrix on speed dial designation pop-up window 400. Three-digit numbers 000 to 999 can be designated as speed dial numbers by using a number key 403 in Fig. 4. To differentiate a designated number from an undesignated number, they may be differently displayed. As one example, the numbers can be displayed in different text colors or background colors, and specific patterns can be inserted.

In FIG. 4, the numbers designated as speed dial numbers are underlined, for example as indicated by a reference numeral 401. In FIG. 3, when the key 301 that designates the speed dial number 063 to the mobile phone number is inputted, the speed dial designation pop-up window 400 having the background color set to the designated speed dial number can be displayed. In this case, the designated number 63 can be displayed on a text input window 407 located at the right upper portion. When the specific speed dial number is not previously designated in step 205, the control unit 101 displays the speed dial number designation pop-up window 400 on the display unit 111 in step 209.

Continuing to FIG. 2B from the last step of FIG. 2A, in step 211, the control unit 101 determines whether a non-designation key, a confirmation key, a cancel key, or a number key is selected by the user. When the non-designation key is selected, the control unit 101 cancels the speed dial number designation in step 213. Then, the process returns to step 211.

When the confirmation key is selected, the control unit 101 designates a number selected by the user to the speed dial number in step 215. Then, the speed dial number designation pop-up window 400 is closed. In step 217, the control unit 101 updates the phone directory window by displaying the designated speed dial number on the phone directory edit window. Then, the algorithm is terminated.

When the cancel key is selected, the control unit 101 closes the speed dial number designation pop-up window 400 in step 219. Then, the algorithm is terminated.

When the number key is selected, the control unit 101 sets a background color to the selected number and displays it in step 221. In step 223, the control unit 101 determines whether the selected number is a number designated as the speed dial number of a specific phone number. When the selected number is not the number designated as the speed dial number, the process returns to step 211. When the selected number is the number designated as the speed dial number, the control unit 101 displays the phone number information on the pop-up window in step 225. The phone number information may be a corresponding phone number and a corresponding recipient's name. In addition, the pop-up window has a delete key. When the user selects the delete key, the control unit 101 informs the user that the speed dial number designation can be cancelled. In step 227, the control unit 101 determines whether the delete key is selected. When the delete key is not selected, the process proceeds to step 211. On the other hand, when the delete key is selected, the control unit 101 cancels the speed dial number designation. Then, the process returns to step 211. In FIG. 4, a recipient's name "KANG A-GOM" and a phone number "010-111-2222" to which a speed dial number 26 is designated may be displayed under the selected number 409 on the pop-up window 411. The delete key may be displayed in a wastebasket shape on the pop-up window 411. When the user selects the delete key, the speed dial number designation can be cancelled.

From the above description, it is apparent that the number designated as the speed dial number, the number undesignated as the speed dial number, the selected number, and the number to which the speed dial number is previously designated can be differentiated by setting different background colors and text colors to them. Moreover, specific patterns can be inserted.

As described above, when the speed dial number is designated, the mobile communication terminal according to the present invention displays the speed dial number designation pop-up window on which numbers are arranged, and designates one of the numbers as the speed dial number of a specific phone number. Therefore, the user can check the designation state of the speed dial numbers and can easily designate/cancel the speed dial number.

While the invention has been shown and described with reference to certain preferred embodiments thereof, it will be understood by those skilled in the art that various changes in form and details may be made therein without departing from the scope of the invention as defined by the appended claims.

## Claims

1. A method for saving a speed dial number in a mobile communication terminal, comprising the steps of:
displaying a speed dial designation pop-up window having a plurality of numbers arranged in an M×N matrix when a phone number is selected; and
designating one of the plurality of numbers as the speed dial number corresponding to the phone number.

2. The method of claim 1, further comprising differently displaying the designated speed dial number from other numbers arranged on the pop-up window.

3. The method of claim 1 or 2, further comprising canceling the speed dial number designation of the designated number when a non-designation key is input.

4. The method of one of claims 1 to 3, wherein the value of M is equal to the value of N.

5. The method of claim 4, wherein the M×N matrix is a 10×10 matrix.

6. The method of one of claims 1 to 3, wherein the arranged plurality of numbers range from 00 to 99.

7. The method of claim 6, wherein a first digit of a three-digit number is expressed using 0-9 number keys.

8. The method of one of claims 1 to 7, further comprising :
closing the speed dial number designation pop-up window; and
updating a phone directory according to the speed dial number designation.

9. The method of claim 1, further comprising displaying a pop-up window including information on the corresponding phone number when the selected number is a number previously designated as a speed dial number of a specified phone number.

10. The method of claim 9, wherein the information on the corresponding phone number includes at least the phone number and a recipient's name.

11. The method of claim 9 or 10, further comprising canceling the speed dial number designation of the selected number when a delete key is input.

12. The method of claim 11, wherein the delete key is displayed on the pop-up window that includes information on the corresponding phone number.

13. The method of one of claims 1 to 12, further comprising closing the speed dial number designation pop-up window when a cancel key is input.

14. The method of one of claims 1 to 13, wherein numbers designated as the speed dial numbers and numbers not designated as the speed dial numbers are differently displayed on the speed dial number designation pop-up window.

15. A mobile communication terminal for saving a speed dial number, comprising:
a controller for displaying a speed dial designation pop-up window having a plurality of numbers arranged in an M×N matrix when a phone number is selected and designating one of the plurality of numbers as the speed dial number corresponding to the phone number; and
an input means for selecting one of the plurality of numbers to be designated as the speed number.

16. The terminal of claim 15, wherein the controller further performs differently displaying the designated speed dial number from other numbers arranged on the pop-up window.

17. The terminal of claim 15 or 16, wherein the controller further performs canceling the speed dial number designation of the designated number when a non-designation key is input.

18. The terminal of one of claims 15 to 17, wherein the controller further performs closing the speed dial number designation pop-up window and updating a phone directory according to the speed dial number designation.
